# EUROPEAN PATENT SPECIFICATION

(11) **EP 3 147 045 B1**
(45) Date of publication and mention of the grant of the patent: **20.09.2017**
(21) Application number: 15200627.6
(22) Date of filing: 17.12.2015
(51) Int. Cl.: B21K 1/76, B21D 53/84, F16C 7/02, B62D 7/20, B21J 5/00

(54) **A MANUFACTURING METHOD FOR WEAR-RESISTANT TRANSMISSION LINK ASSEMBLIES OF AUTOMOBILE TURBOCHARGERS**
VERFAHREN ZUR HERSTELLUNG VERSCHLEISSFESTER ÜBERTRAGUNGSELEMENTANORDNUNGEN VON AUTOMOBILTURBOLADERN
PROCÉDÉ DE FABRICATION D'ENSEMBLES DE LIAISON DE TRANSMISSION RÉSISTANTS À L'USURE POUR DES TURBOCOMPRESSEURS D'AUTOMOBILES

(30) Priority: 24.09.2015 CN 201510615047
(43) Date of publication of application: 29.03.2017
(73) Proprietor: Essence Fastening System (Shanghai) Co., Ltd., Shanghai 201818 (CN)
(72) Inventor: SONG, Guangdong, 212000 Zhenjiang (CN); YI, Qinfeng, 215400 Taicang (CN); CHEN, Zhen, 201818 Shanghai (CN)
(74) Representative: Sun, Yiming

(56) References cited:
- JP-A- S5 890 435
- JP-A- S61 296 936
- JP-A- 2004 017 079
- US-B1- 6 490 790

## Description

### Technical Field

The invention relates to a manufacturing method for wear-resistant transmission link assemblies, in particular to a manufacturing method for wear-resistant transmission link assemblies of automobile turbochargers, according to the preamble of claim 1 (see for example JP-A-61 296 936).

### Background of the Invention

With the improvement of the social living standards, small passenger cars have become necessary means of transportation for social families. Based on the impacts on the social environment, various large automobile manufacturers vigorously launch the brand models characterized by energy conservation & emission reduction, low fuel consumption and low emission as the mainstream recognized by the society and make due contributions to the social environment. Therefore, automobile manufactures launch the turbocharged low-emission cars with low fuel consumption, which utilize turbocharging technology to reuse and convert the exhaust into power, so as to achieve the effect of energy conservation and emission reduction. Currently, such domestic manufacturers as FAW-Volkswagen, Shanghai Volkswagen, General Motors, Ford and Great Wall Motors have launched a variety of low-emission cars with turbocharged engines in batches. Small turbocharged cars will become a widely-used transportation means.

In the product design, since the assembly is a key component in the turbocharger with such specificities as high wear resistance and high working temperature, the materials with heat resistance and anticorrosion performance, such as 1.4571 SUS316Ti, shall be selected; the link shall have a minimum thickness of 6mm and shall meet high precision requirements for the dimensions, form & location tolerances and position tolerances of the installation surfaces, but currently cannot be manufactured by a reasonable method; in foreign countries, they are formed by punching 6mm thick plates, but the mould is quite expensive with a short service life, leading to a low utilization rate and low production efficiency of materials and unstable quality, not suitable for current markets.

### Summary of the Invention

The technical issue to be solved by the invention is to provide a manufacturing method for wear-resistant transmission link assemblies of automobile turbochargers characterized by a high utilization rate of materials, stable quality, a low processing cost, high production efficiency, suitability for mass production and reduction of environmental pollution.

The invention solves the technical issue by means of a manufacturing method for wear-resistant transmission link assemblies of automobile turbochargers comprising the following steps:
Step 1, blank forming, by means of cold upsetting technology or perform machining and blanking and then cold upsetting to form the blank;
Step 2, flattening, to transversely deform the blank formed in Step 1 with a press, so as to generate the deformation meeting the process requirements for preforming and obtain the flat thickness required in the design for wear-resistant transmission link of automobile turbochargers;
Step 3, trimming and shaping, to trim and shape both irregular sides of the blank flattened in Step 2 to meet the dimension requirements in the drawing and meanwhile correct the flattening in Step 2;
Step 4, locating surface trimming, to peripherally shape the irregular connector end of the wear-resistant transmission link of the automobile turbocharger formed in flattening of Step 2, form the locating basis for the next step, meet the processing precision requirements in the subsequent steps and meet the dimension requirements in the drawing;
Step 5, threaded blank forming, to form the threaded blank diameter at the external threaded connection end of the wear-resistant transmission link of the automobile turbocharger by means of turning, use a thread rolling machine, apply a thread rolling die and a thread plate corresponding to the thread specification and extrude the blank to form the required external thread;
Step 6, bending, to change the shape of the link part of the wear-resistant transmission link of the automobile turbocharger from a straight shape to a Z shape;
Step 7, transmission hole finishing, to drill and mill a precise connection and transmission hole on the connector of the wear-resistant transmission link of the automobile turbocharger, perpendicular to the center of the connector plane and successively complete the pre-drilling, fine milling and edge deburring at the drilling and milling center;
Step 8, surface treatment, to perform plasma nitrocarburizing, salt bath or nickel-phosphorus alloy treatment on the surface of parts completed in Step 7 and form the wear-resistant transmission link of the automobile turbocharger, and
Step 9, assembling, to assemble the internal thread joint and the wear-resistant transmission link of the automobile turbocharger through simulation installation tooling using hexagon lock nuts and finally complete a wear-resistant transmission link assembly of the automobile turbocharger.

Preferably, the blank is a cylinder or a cylindrical blank with steps at the end.

The positive and progressive effect of the invention lies in utilization of the characteristics of the cold extrusion technology and the simple upsetting technology to transversely extrude, punch and deform the cylindrical blanks, replacement of the traditional heat-resistant steel plate type thick plates with a low coefficient of thermal expansion and a thickness above 6mm to meet high precision requirements for the thickness, a uniform dimension and an overall thickness tolerance of less than 0.05mm; it realizes the production and application of the heat-resistant steel materials with a low coefficient of thermal expansion such as SUS316Ti in the key high-precision connection assemblies for turbochargers of passenger cars. The invention is characterized by a high utilization rate of materials, reduction of environmental pollution, stable quality, low processing cost, high production efficiency and suitability for mass production.

### Brief Description of the Drawings

Fig. 1 is the process flow diagram of the manufacturing method for wear-resistant transmission link assemblies of automobile turbochargers in the invention.
Fig. 2 is the structure diagram of a product formed in Step 1 of the invention.
Fig. 3 is the structure diagram of another product formed in Step 1 of the invention.
Fig. 4 is the structure diagram of a product formed in Step 2 of the invention.
Fig. 5 is the structure diagram of a product formed in Step 3 of the invention.
Fig. 6 is the structure diagram of a product formed in Step 4 of the invention.
Fig. 7 is the structure diagram of a product formed in Step 5 of the invention.
Fig. 8 is the structure diagram of a product formed in Step 6 of the invention.
Fig. 9 is the structure diagram of a product formed in Step 7 of the invention.
Fig. 10 is the structure diagram of a product formed in Step 9 of the invention.

### Detailed Description of the Embodiments

The preferred embodiments of the invention are given in combination with the drawings below to detail the technical scheme of the invention.

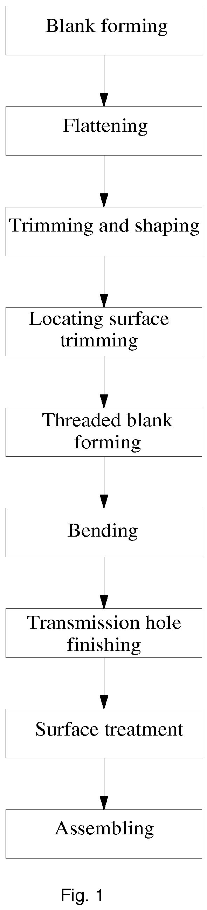

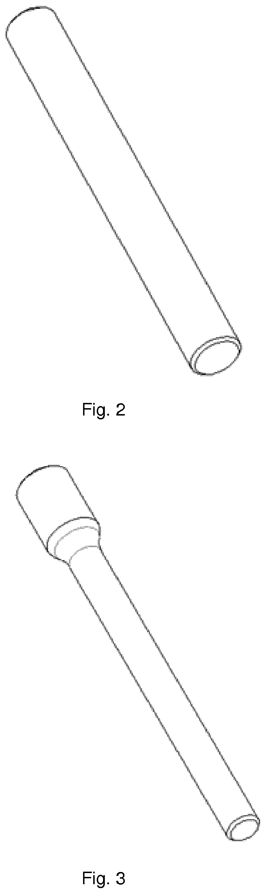

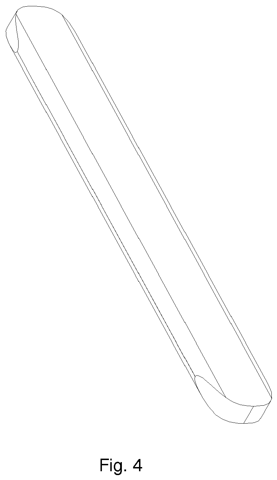

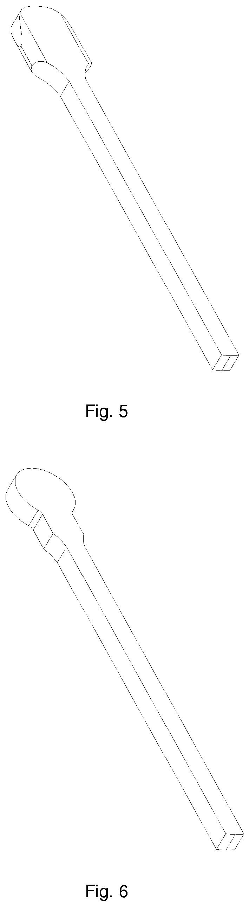

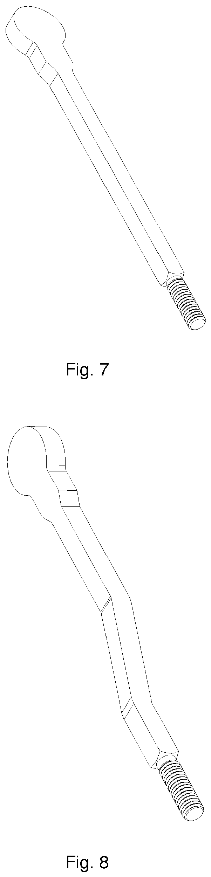

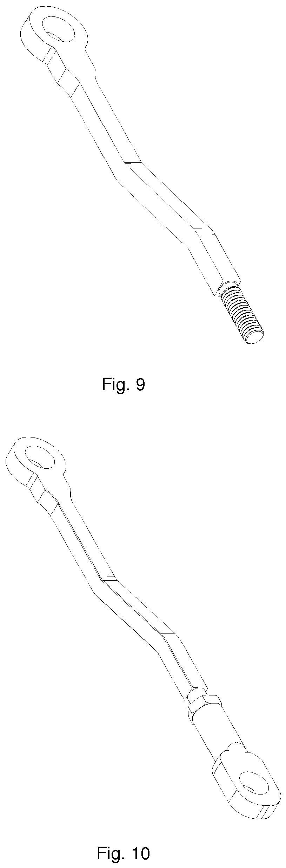

As shown in Fig. 1-10, the manufacturing method for wear-resistant transmission link assemblies of automobile turbochargers in the invention comprises the following steps:
Step 1, blank forming, by means of cold upsetting technology or perform machining and blanking and then cold upsetting to form the blank, which is the wear-resistant transmission link blank of the automobile turbocharger. The outer diameter, length, and structure, etc. of the blank are converted according to the total volume of the design product, the theoretic volume is added with a trimming allowance of 5-10%, and a cylinder or a cylindrical blank with steps at the end is formed. The utilization rate of materials is as high as over 90%, thus reducing the costs of the materials; the cold upsetting technology is a continuous automatic production process with a high production efficiency not less than 60 pieces/minute; the moulds have a service life as high as over 3 million pieces, and the products have stable quality and good consistency.
Step 2, flattening, to transversely deform the blank formed in Step 1 with a press, so as to generate the deformation meeting the process requirements for preforming and obtain the flat thickness required in the design for wear-resistant transmission link of automobile turbochargers; flattening is to transversely extrude and deform the wear-resistant transmission link blanks, so as to meet the width and length requirements in the process design, with higher and more stable processing efficiency than milling using a CNC machine tool and a larger cost advantage, and solve the shortages in punching and forming of plates at home and abroad; solve the problems of the dies required for punching such as complex structures, high cost and short service life; and solve the problem that the thick wear-resistant steel plates fail to meet the tolerance precision (the overall precision shall be less than 0.05mm); the relative degree of parallelism of two effective working surfaces formed by flattening shall be less than 0.1mm and the planarity shall be less than 0.05mm, so as to guarantee adequate application of the effective working surfaces during installation of assemblies;
Step 3, trimming and shaping, to trim and shape both irregular sides of the blank flattened in Step 2 to form a beautiful appearance and meet the dimension requirements in the drawing and meanwhile correct flattening in Step 2, further improve the dimension precision of the wear-resistant transmission link of the automobile turbocharger and the planarity and relative degree of parallelism of the working surface and stabilize the consistency of the wear-resistant transmission link assembly of the automobile turbocharger in installation of the automobile turbocharger.
Step 4, locating surface trimming, to peripherally shape the irregular connector end of the wear-resistant transmission link of the automobile turbocharger formed in flattening of Step 2, form the locating basis for the next step, meet the processing precision requirements in the subsequent steps and meet the dimension requirements in the drawing.
Step 5, threaded blank forming, to form the threaded blank diameter at the external threaded connecting end of the wear-resistant transmission link of the automobile turbocharger by means of turning, use a thread rolling machine, apply a thread rolling die and a thread plate corresponding to the thread specification and extrude the blank to form the required external thread; the formed external threaded connecting end is used for adjustable connection with the internal threaded connecting end produced by the technology similar to the invention.
Step 6, bending, to change the shape of the link part of the wear-resistant transmission link of the automobile turbocharger from a straight shape to a Z shape, utilize the effective space to the maximum, guarantee stable connection and transmission, reach the maximum effective working surface and keep the relative degree of parallelism of both ends below 0.1mm when the wear-resistant transmission link assembly of the automobile turbocharger is working.
Step 7, transmission hole finishing, to process the transmission hole of the wear-resistant transmission link of the automobile turbocharger, i.e. drill and mill a precise connection and transmission hole on the connector of the wear-resistant transmission link of the automobile turbocharger, perpendicular to the center of the connector plane. Since the hole is an effective transmission contact surface, with high requirements for the dimension precision, the relative verticality between the hole and two connection planes is less than 0.05mm. In order to achieve high-precision structure dimensions and form & location dimensions of key parts for transmission of turbochargers, successively complete the pre-drilling, fine milling and edge deburring procedures at the drilling and milling center.
Step 8, surface treatment, to perform plasma nitrocarburizing, salt bath or nickel-phosphorus alloy treatment on the surface of parts completed in Step 7, form the wear-resistant transmission link of the automobile turbocharger, enable the hardness of the two working surfaces of the connector of the wear-resistant transmission link of the automobile turbocharger and the precise connection and transmission holes vertical to the two working surfaces to meet HV 850-1700, form the surface wear layer with certain thickness, keep the core hardness of the raw material itself and enable the parts to keep good toughness and good wear resistance.
Step 9, assembling, to assemble the internal thread joint produced by the technology similar to the invention and the wear-resistant transmission link of the automobile turbocharger produced by the invention through simulation installation tooling using hexagon lock nuts and finally complete a wear-resistant transmission link assembly of the automobile turbocharger.

The invention utilizes the characteristics of the cold extrusion technology and the simple upsetting technology to punch and deform the blanks to meet the precision requirements for the thickness of the thick heat-resistant steel plates with a thickness above 6mm and a low coefficient of thermal expansion, with a uniform dimension and an overall thickness tolerance of less than 0.05mm; it realizes the application of the heat-resistant steel materials with a low coefficient of thermal expansion such as SUS316Ti in the key high-precision connection assemblies for turbochargers of passenger cars. The invention is characterized by a high utilization rate of materials, reduction of environmental pollution, stable quality, a low processing cost, high production efficiency and suitability for mass production.

Although the specific embodiments of the invention are described as above, the technicians in the field shall understand that they are only examples and they can be subject to various changes or modifications without departing from the scope of the invention as defined by the appended claims.

## Claims

1. A manufacturing method for wear-resistant transmission link assemblies of automobile turbochargers, comprising the following steps:
Step 1, blank forming, by means of cold upsetting technology or perform machining and blanking and then cold upsetting to form the blank;
Step 2, flattening, to transversely deform the blank formed in Step 1 with a press, so as to generate the deformation meeting the process requirements for preforming and obtain the flat thickness required in the design for wear-resistant transmission links of automobile turbochargers;
Step 3, trimming and shaping, to trim and shape both irregular sides of the blank flattened in Step 2 to meet the dimension requirements in the drawing and meanwhile correct the flattening in Step 2;
Step 4, locating surface trimming, to peripherally shape the irregular connector end of the wear-resistant transmission link of the automobile turbocharger formed in flattening of Step 2, form the locating basis for the next step, meet the processing precision requirements in the subsequent steps as well as the dimension requirements in the drawing;
Step 5, threaded blank forming, to form the threaded blank diameter at the external threaded connection end of the wear-resistant transmission link of the automobile turbocharger by means of turning, use a thread rolling machine, apply a thread rolling die and a thread plate corresponding to the thread specification and extrude the blank to form the required external thread;
Step 6, bending, to change the shape of the link part of the wear-resistant transmission link of the automobile turbocharger from a straight shape to a Z shape;
Step 7, transmission hole finishing, to drill and mill a precise connection and transmission hole on the connector of the wear-resistant transmission link of the automobile turbocharger, perpendicular to the center of the connector plane and successively complete the pre-drilling, fine milling and edge deburring at the drilling and milling center;
Step 8, surface treatment, to perform plasma nitrocarburizing, salt bath or nickel-phosphorus alloy treatment on the surface of parts completed in Step 7 and form the wear-resistant transmission link of the automobile turbocharger, and
Step 9, assembling, to assemble the internal thread joint and the wear-resistant transmission link of the automobile turbocharger through simulation installation tooling using hexagon lock nuts and finally complete a wear-resistant transmission link assembly of the automobile turbocharger.

2. The manufacturing method for wear-resistant transmission link assemblies of automobile turbochargers according to Claim 1, wherein the blank is a cylinder or a cylindrical blank with steps at the end.

## Patentansprüche

1. Herstellungsverfahren für verschleißbeständige Übertragungsverbindungs-Einheiten von Autoturboladern, das die folgenden Schritte umfasst:
Schritt 1, Rohteilherstellung, mittels Kaltstauch-Technologie oder Ausführung von maschineller Bearbeitung und Stanzen und dann Kaltstauchen, um den Rohling zu bilden;
Schritt 2, Abflachen, um den in Schritt 1 gebildeten Rohling quer mit einer Presse zu verformen, um so die Verformung zu erzeugen, die die Prozessanforderungen zur Vorformung erfüllt, und um die flache Dicke zu erhalten, die in der Konstruktion für verschleißfeste Übertragungsverbindungen von Auto-Turboladern gefordert wird;
Schritt 3, Trimmen und Formgebung, um beide unregelmäßigen Seiten des Rohlings, der in Schritt 2 abgeflacht wurde, zu trimmen und zu formen, um die Abmessungsanforderungen in der Zeichnung zu erfüllen und in der Zwischenzeit das Abflachen von Schritt 2 zu korrigieren;
Schritt 4, Lokalisieren des Oberflächentrimmens, um das unregelmäßige Verbinderende der verschleißfesten Übertragungsverbindung des Auto-Turboladers, das beim Abflachen von Schritt 2 gebildet wurde, peripher zu formen; Bilden der Lokalisierungsbasis für den nächsten Schritt, Erfüllen der Präzisionsanforderungen für die Verarbeitung in nachfolgenden Schritten sowie der Abmessungsanforderungen in der Zeichnung;
Schritt 5, Formen des Rohlings mit Gewinde, um den Durchmesser des Gewinderohlings am externen Gewindeverbindungsende der verschleißfesten Übertragungsverbindung des Auto-Turboladers durch Drehen zu bilden, Verwenden einer Gewinderollmaschine, Anwendung von Gewindewalzbacken und einer Gewindeplatte entsprechend der Gewindefestlegung und Strangpressen des Rohlings, um das erforderliche externe Gewinde zu formen;
Schritt 6, Biegen, um die Form des Verbindungsteils der verschleißfesten Übertragungsverbindung des Auto-Turboladers von einer geraden Form in eine Z-Form zu bringen;
Schritt 7, Fertigbearbeitung Übertragungsloch, um ein präzises Verbindungs- und Übertragungsloch auf dem Verbinder der verschleißfesten Übertragungsverbindung, senkrecht zur Mitte der Verbinderebene, zu bohren und zu walzen und nacheinander das Vorbohren, Feinwalzen und Kantenentgraten am Bohr- und Walzzentrum fertigzustellen;
Schritt 8, Oberflächenbehandlung, um die Plasma-Nitrocarburierung, die Salzbad- oder Nickel-Phosphorlegierungs-Behandlung auf der Oberfläche von Teilen auszuführen, die in Schritt 7 fertiggestellt wurden, und Formen der verschleißfesten Übertragungsverbindung des Auto-Turboladers, und
Schritt 9, Montage, um das Innengewinde-Gelenk und die verschleißfeste Übertragungsverbindung des Auto-Turboladers durch Simulations-Installations-Werkzeuge zu montieren, unter Verwendung von hexagonalen Kontermuttern, und schließlich Fertigstellen einer verschleißfesten Übertragungsverbindungs-Einheit des Auto-Turboladers.

2. Herstellungsverfahren für verschleißfeste Übertragungsverbindungs-Einheiten von Auto-Turboladern nach Anspruch 1, wobei der Rohling ein Zylinder oder ein zylindrischer Rohling mit Stufen am Ende ist.

## Revendications

1. Procédé de fabrication pour des ensembles de liens de transmission étanche de turbocompresseurs pour automobiles, comprenant les étapes suivantes :
Etape 1, formation de l'ébauche, au moyen d'une technologie de refoulement à froid ou effectuer l'usinage et le découpage et ensuite le refoulement à froid pour former l'ébauche ;
Etape 2, aplatissement, pour déformer de manière transversale l'ébauche formée lors de l'Etape 1 avec une presse, de façon à générer la déformation pour répondre aux besoins du processus liés à la préformation et pour obtenir l'épaisseur plate requise dans le design des liens de transmission étanche de turbocompresseur pour automobiles ;
Etape 3, découpage et mise en forme, pour découper et mettre en forme les deux côtés irréguliers de l'ébauche aplatie lors de l'Etape 2 pour répondre aux besoins de la dimension dans le dessin et entre-temps corriger l'aplatissement lors de l'Etape 2 ;
Etape 4, localisation du découpage de surface, pour mettre en forme de manière périphérique l'extrémité irrégulière de connecteur du lien de transmission étanche du turbocompresseur pour automobiles formée dans l'aplatissement lors de l'Etape 2, à partir de la base de localisation pour la prochaine étape, répondre aux besoins de précision de traitement dans les étapes suivantes ainsi que les exigences de dimension dans le dessin ;
Etape 5, formation de l'ébauche filetée, pour former le diamètre d'ébauche filetée au niveau de l'extrémité de raccordement filetée externe du lien de transmission étanche du turbocompresseur pour automobiles par un mouvement de rotation, utiliser une machine à enrouler des filets, appliquer un colorant à enrouler des filets et une plaque filetée correspondant à la spécification filetée et extruder l'ébauche pour former le filet externe requis ;
Etape 6, pliage, pour changer la forme de la partie de lien du lien de transmission étanche du turbocompresseur pour automobiles depuis une forme droite à une forme en Z ;
Etape 7, finition du trou de transmission, pour percer et fraiser un trou de raccordement et de transmission sur le connecteur du lien de transmission étanche du turbocompresseur pour automobiles, perpendiculaire au centre du plan du connecteur et effectuer avec succès le pré-perçage complet, le fraisage fin, et l'ébavurage des côtés au niveau du centre de perçage et de fraisage ;
Etape 8, traitement de surface, pour effectuer une nitrocarburation de plasma, un traitement d'alliage aux sels de bain ou au nickel-phosphore sur la surface des parties complétées lors de l'Etape 7 et former le lien de transmission étanche du turbocompresseur pour automobiles, et
Etape 9, assemblage, pour rassembler le raccord fileté interne et le lien de transmission étanche du turbocompresseur pour automobiles grâce à un outillage d'installation de simulation en utilisant des écrous de blocages hexagonaux et finalement compléter un assemblage de liens de transmission étanche du turbocompresseur pour automobiles.

2. Procédé de fabrication pour des ensembles de liens de transmission étanches de turbocompresseurs pour automobiles selon la revendication 1, dans lequel l'ébauche est un cylindre ou une ébauche cylindrique munie d'un escalier au niveau de l'extrémité.
